# EUROPÄISCHE PATENTSCHRIFT

(11) **EP 4 078 904 B1**
(45) Veröffentlichungstag und Bekanntmachung des Hinweises auf die Patenterteilung: **13.08.2025**
(21) Anmeldenummer: 20829838.0
(22) Anmeldetag: 14.12.2020
(51) Int. Cl.: H04L 12/40

(54) **SENDE-/EMPFANGSEINRICHTUNG FÜR EIN BUSSYSTEM UND VERFAHREN ZUR REDUZIERUNG VON SCHWINGUNGEN EINER BUSDIFFERENZSPANNUNG BEI EINGEKOPPELTEN STÖRUNGEN**
TRANSMITTING/RECEIVING DEVICE FOR A BUS SYSTEM, AND METHOD FOR REDUCING OSCILLATIONS OF A BUS DIFFERENTIAL VOLTAGE WHEN INTERFERENCES ARE COUPLED IN
DISPOSITIF DE TRANSMISSION/RÉCEPTION POUR UN SYSTÈME DE BUS, ET PROCÉDÉ PERMETTANT DE RÉDUIRE DES OSCILLATIONS D'UNE TENSION DIFFÉRENTIELLE DE BUS LORS DE L'ACCOUPLEMENT D'INTERFÉRENCES

(30) Priorität: 18.12.2019 DE 102019220022
(43) Veröffentlichungstag der Anmeldung: 26.10.2022
(73) Patentinhaber: Robert Bosch GmbH, 70442 Stuttgart (DE)
(72) Erfinder: PANNWITZ, Axel, 01445 Radebeul (DE); WALKER, Steffen, 72770 Reutlingen (DE)
(86) Internationale Anmeldenummer: PCT/EP2020/085903
(87) Internationale Veröffentlichungsnummer: WO 2021/122413

(56) Entgegenhaltungen:
- DE-A1- 102017 213 837
- DE-A1- 102018 202 614
- US-A1- 2016 323 287
- US-A1- 2018 041 240

## Beschreibung

Die vorliegende Erfindung betrifft eine Sende-/Empfangseinrichtung für ein Bussystem und ein Verfahren zur Reduzierung von Schwingungen einer Busdifferenzspannung bei eingekoppelten Störungen, insbesondere beim Übergang zwischen verschiedenen Buszuständen.

### Stand der Technik

In einem Bussystem werden Informationen bzw. Daten, die in Bytes bzw. Bits enthalten sind, als Nachrichten über einen Bus zwischen Busteilnehmern übertragen. Die Informationen werden dabei durch unterschiedliche Bitzustände oder Spannungszustände dargestellt. Die unterschiedlichen Bitzustände haben beim Übertragen der Nachricht über den Bus des Bussystems unterschiedliche Buszustände zur Folge. Je nach Bussystem existieren für Nachrichten- oder Datenübertragung verschiedene Übertragungsprotokolle.

Beispielsweise werden beim CAN-Bussystem Nachrichten mittels des CAN- und/oder CAN FD Protokolls übertragen, wie es im Standard ISO-11898-1:2015 als CAN Protokoll-Spezifikation mit CAN FD beschrieben ist. Das CAN-Bussystem ist heute für die Kommunikation zwischen Sensoren und Steuergeräten weit verbreitet. Oft wird das CAN-Bussystem in Fahrzeugen oder Automatisierungsanlagen, usw. für eine Kommunikation zwischen den einzelnen Busteilnehmern eingesetzt.

Bei CAN und CAN FD findet das bekannte CSMA/CR-Verfahren Verwendung, welches in einer ersten Phase zum Übertragen einer Nachricht gleichzeitigen Zugriff von Teilnehmerstationen des Bussystems auf den Bus erlaubt, ohne dass eine höher priorisierte Nachricht zerstört wird. Hierfür müssen die Sende-/Empfangseinrichtungen, die auch Transceiver genannt werden, in der Lage sein, den Bus niederohmig treiben zu können. Dadurch ist ein dominanter Buszustand oder Bitzustand als einer der beiden verschiedenen Buszustände oder Bitzustände herstellbar. Im Rezessivzustand, als dem anderen der beiden verschiedenen Buszustände, sind dagegen die Sende-/Empfangseinrichtungen verhältnismäßig hochohmig. Der Rezessivzustand ist von einem Dominantzustand überschreibbar.

Dies wird genutzt, um in einer Arbitrationsphase auszuhandeln, welche der Teilnehmerstationen in einer nachfolgenden Datenphase ihre Nachricht auf den Bus senden darf. In der Datenphase wird dadurch ein exklusiver, kollisionsfreier Zugriff auf den Bus sichergestellt. Infolgedessen ist die Datenübertragung in beiden Phasen sehr robust. Als Folge davon sinkt die Häufigkeit von fehlerhafter Datenübertragung signifikant, wodurch die Datenübertragungsgeschwindigkeit im Bussystem gesteigert wird.

Um Daten in der Datenphase mit höherer Bitrate übertragen zu können als bei CAN, wurde im CAN FD Nachrichten-Format eine Option zur Umschaltung auf eine höhere Bitrate für die Datenphase geschaffen. Bei solchen Techniken wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet. Bei CAN FD ist die Nutzdatenlänge von 8 auf bis zu 64 Bytes erweitert und sind die Datenübertragungsraten deutlich höher als bei CAN.

Der Übergang von Dominant nach Rezessiv ist je nach Bustopologie, Länge der Stubs bzw. Stichleitungen, Position und Anzahl der Terminationswiderstände mit einer Schwingneigung behaftet. Dies ist sehr unvorteilhaft bei der Systemauslegung, weil infolgedessen die Bitzeit so lang sein muss, bis die Schwingung ausreichend bedämpft ist. Ist die Bitzeit nicht lang genug, kann die Sende-/Empfangseinrichtung im Rezessivzustand fälschlicherweise ein Dominant erkennen.

DE 10 2018 202 614 A1 zeigt eine Vorrichtung, die zusätzlich zu Teilnehmerstationen des Bussystems an den Bus anschließbar ist. Die Vorrichtung hat eine Schwingungsreduktionseinheit, deren Einschaltdauer dynamisch anpassbar ist, um die Schwingungen am Bus mit dynamischer Anpassung der Einschaltdauer zu reduzieren.

Die Schwingneigung kann zudem durch eingekoppelte hochfrequente Störungen verstärkt werden. Wesentlich für die Anwendung des CAN-FD-Busses im Fahrzeug ist die hohe Störfestigkeit gegenüber eingekoppelten, hochfrequenten Störungen. Daher ist für eine Sende-/Empfangseinrichtung für ein Bussystem eine vorbestimmte Störfestigkeit durch Tests gemäß der Spezifikation IEC62228 nachzuweisen.

### Offenbarung der Erfindung

Daher ist es Aufgabe der vorliegenden Erfindung, eine Sende-/Empfangseinrichtung für ein Bussystem und ein Verfahren zur Reduzierung von Schwingungen einer Busdifferenzspannung bei eingekoppelten Störungen bereitzustellen, welche die zuvor genannten Probleme lösen. Insbesondere sollen eine Sende-/Empfangseinrichtung für ein Bussystem und ein Verfahren zur Reduzierung von Schwingungen einer Busdifferenzspannung bei eingekoppelten Störungen, insbesondere einer Schwingneigung beim Übergang vom dominanten zum rezessiven Zustand, in einem Bussystem bereitgestellt werden.

Die Aufgabe wird durch eine Sende-/Empfangseinrichtung für ein Bussystem mit den Merkmalen von Anspruch 1 gelöst. Die Sende-/Empfangseinrichtung umfasst eine Sendestufe zum Senden eines Sendesignals an eine erste Busader eines Busses des Bussystems, bei welchem Bussystem zumindest zeitweise ein exklusiver, kollisionsfreier Zugriff einer Teilnehmerstation auf den Bus des Bussystems gewährleistet ist, und zum Senden des Sendesignals an eine zweite Busader des Busses, und ein Schwingungsreduktionsmodul zur Dämpfung einer Schwingung eines sich an Anschlüssen für die Busadern einstellenden Bussignals, wenn die Sende-/Empfangseinrichtung als Sender des Sendesignals agiert, wobei das Schwingungsreduktionsmodul einen ersten Widerstand aufweist, der zwischen die erste Busader und einen Anschluss für Masse schaltbar ist, wie in Anspruch 1 beschrieben. Zudem ist es möglich, dass das Schwingungsreduktionsmodul einen zweiten Widerstand aufweist, der zwischen die zweite Busader und einen Anschluss für eine Spannungsversorgung des Bussystems schaltbar ist, wie in Anspruch 2 beschrieben.

Die zuvor genannte Aufgabe wird zudem durch eine Sende-/Empfangseinrichtung für ein Bussystem mit den Merkmalen von Anspruch 2 gelöst. Die Sende-/Empfangseinrichtung umfasst eine Sendestufe zum Senden eines Sendesignals an eine erste Busader eines Busses des Bussystems, bei welchem Bussystem zumindest zeitweise ein exklusiver, kollisionsfreier Zugriff einer Teilnehmerstation auf den Bus des Bussystems gewährleistet ist, und zum Senden des Sendesignals an eine zweite Busader des Busses, und ein Schwingungsreduktionsmodul zur Dämpfung einer Schwingung eines sich an Anschlüssen für die Busadern einstellenden Bussignals, wenn die Sende-/Empfangseinrichtung als Sender des Sendesignals agiert,
wobei das Schwingungsreduktionsmodul einen Widerstand aufweist, der zur Dämpfung der Schwingung zwischen die erste Busader und die zweite Busader schaltbar ist, wie in Anspruch 5 beschrieben.

Jede der zuvor beschriebenen Sende-/Empfangseinrichtungen ist derart ausgestaltet, dass eingekoppelte Störungen immer und nicht nur bei Testverfahren erkannt und bedämpft werden können. Dabei kann jeglichen eingekoppelten Störungen positiv entgegengewirkt werden, wie beispielsweise Störungen, die durch elektrostatische Entladung (ESD = Electrostatic Discharge) im Betrieb oder durch ISO-Pulse oder Rundfunksender (BCI = Broadcast Interference) verursacht werden, oder Störungen aufgrund von Testverfahren, wie DPI (Direct Power Injection = Gleichspannungseinkopplung), usw.

Mit den beschriebenen Sende-/Empfangseinrichtungen ist jeweils eine sehr gute Dämpfung oder Reduzierung von Schwingungen beim Übergang von Dominant nach Rezessiv möglich. Dadurch ist ein sicherer Empfang auch bei höheren Bitraten möglich, die insbesondere im Datenbereich einer Nachricht eingesetzt werden. Als Folge davon steigt die Übertragungsrate oder Übertragungsgeschwindigkeit der Nachrichten im Bussystem.

Die beschriebenen Sende-/Empfangseinrichtungen können auch bei Übertragungsraten von beispielsweise 2MBit oder 5MBit die Störfestigkeitsanforderungen der Spezifikation IEC62228 erfüllen. Bei derartigen Übertragungsraten dürfen die Pulsflanken an den Übergangen der Buszustände viel weniger jittern als bei Classical-CAN, da die Bitzeit bei einer Übertragungsrate von 2MBit oder 5MBit gegenüber dem Classical -CAN, das einer Baudrate von 500kbit/s hat, um den Faktor 4 bis 10 verkürzt ist.

Zudem erlaubt eine Dämpfung und damit Reduzierung der Schwingungen beim Übergang zwischen unterschiedlichen Bitzuständen oder Spannungszuständen, insbesondere beim CAN-Bussystem von Dominant nach Rezessiv, mehr Freiheit bei der Auslegung von Bustopologien und/oder von Abschlüssen und/oder von Stubs und/oder von der Anzahl der Knoten bzw. Teilnehmerstationen des Bussystems.

Noch dazu wird durch die beschriebene Ausgestaltung der Sende-/Empfangseinrichtungen eine vorteilhafte Veränderung des Spektrums bei leitungsgebundener Emission erzielt. Die Abstrahlung von Emissionen kann nämlich im kritischen Frequenzbereich verringert werden, der beispielsweise zwischen ca. ein und ca. drei MHz liegt, was der Resonanzfrequenz aus Gleichtaktdrossel und parasitären Kapazitäten entspricht. Stattdessen tritt durch die beschriebenen Sende-/Empfangseinrichtungen die Abstrahlung von Emissionen in dem unkritischen Frequenzbereich auf, der bei dem genannten Beispiel bei Frequenzen größer als ca. 10 MHz liegt, und bei dem die Drossel wirkt.

Die Sende-/Empfangseinrichtungen sind für alle Kommunikationssysteme geeignet, bei welchen ein Buszustand aktiv getrieben wird, wie insbesondere bei einem CAN-Bussystem, einem CAN-HS-Bussystem, einem CAN-FD-Bussystem, usw. Bei einem CAN-HS-Bussystem (HS = Hochgeschwindigkeit = Highspeed) ist eine Datenübertragungsrate von bis zu 500 kBit pro Sekunde (500 kbps) möglich. Bei einem CAN FD-Bussystem ist eine Datenübertragungsrate von größer 1 MBit pro Sekunde (1Mbps) möglich.

Vorteilhafte weitere Ausgestaltungen der jeweiligen Sende-/Empfangseinrichtung sind in den abhängigen Ansprüchen beschrieben.

Denkbar ist, dass das Schwingungsreduktionsmodul einen Hochfrequenzdetektor hat zum Erfassen von hochfrequenter Störstrahlung und zur Ermittlung, wann die Schwingungsdämpfung des Schwingungsreduktionsmoduls eingeschaltet werden soll, so dass der erste Widerstand zwischen die erste Busader und den Anschluss für Masse geschaltet wird und der zweite Widerstand zwischen die zweite Busader und den Anschluss für die Spannungsversorgung des Bussystems geschaltet wird, wobei der Hochfrequenzdetektor ausgestaltet ist, das Einschalten des Schwingungsreduktionsmoduls nur nach einem Übergang von einem dominanten Buszustand zu einem rezessiven Buszustand anzuweisen, und wobei die Sende-/Empfangseinrichtung ausgestaltet ist, die Buszustände derart zu erzeugen, dass der dominante Buszustand den rezessiven Buszustand überschreiben kann.

Die Sende-/Empfangseinrichtung kann zudem ein Zeitglied aufweisen zum Ausschalten des Schwingungsreduktionsmoduls nach Ablauf einer vorbestimmten Zeitdauer nach dem Einschalten der Schwingungsdämpfung des Schwingungsreduktionsmoduls.

Gemäß einem Ausführungsbeispiel hat die Sende-/Empfangseinrichtung (12A) zudem eine Schaltung zur Begrenzung eines negativen Spannungswerts einer Differenzspannung auf dem Bus bei einem Übergang der Differenzspannung von einem dominanten Buszustand zu einem rezessiven Buszustand.

In einer speziellen Ausgestaltung ist die Sende-/Empfangseinrichtung zum Senden und Empfangen von Nachrichten nach dem CAN FD Protokoll ausgestaltet.

Möglicherweise hat der erste und zweite Widerstand jeweils einen Wert von etwa 150 Ohm oder der Widerstand hat einen Wert von etwa 150 Ohm.

Optional hat die Empfangsstufe der Sende-/Empfangseinrichtung oder das Schwingungsreduktionsmodul zudem einen Kommunikationsphasen-Erfassungsblock zum Erfassen von unterschiedlichen Phasen einer Kommunikation auf dem Bus, wobei der Kommunikationsphasen-Erfassungsblock ausgestaltet ist, die Schwingungsdämpfung des Schwingungsreduktionsmoduls in Abhängigkeit von dem Erfassungsergebnis des Kommunikationsphasen-Erfassungsblocks einzuschalten.

Mindestens eine der zuvor beschriebenen Sende-/Empfangseinrichtungen kann Teil eines Bussystems sein, das einen Bus, und mindestens zwei Teilnehmerstationen aufweist, welche über den Bus derart miteinander verbunden sind, dass sie miteinander kommunizieren können. Hierbei weist mindestens eine der mindestens zwei Teilnehmerstationen eine zuvor beschriebene Sende-/Empfangseinrichtung auf.

Von den mindestens zwei Teilnehmerstationen kann mindestens eine Teilnehmerstation eine Kommunikationssteuereinrichtung aufweisen, welche ausgestaltet ist, ein Signal an die Sende-/Empfangseinrichtung zu senden, welches die Sende-/Empfangseinrichtung als Grundlage für das Signal auf den Busadern verwendet, und das Signal mit einem von der Sende-/Empfangseinrichtung vom Bus empfangenen Signal zu vergleichen, und wobei die Kommunikationssteuereinrichtung ausgestaltet ist, das Schwingungsreduktionsmodul auf der Grundlage des Vergleichs anzusteuern.

Die zuvor genannte Aufgabe wird zudem durch ein Verfahren zur Reduzierung von Schwingungen einer Busdifferenzspannung bei eingekoppelten Störungen mit den Merkmalen von Anspruch 13 gelöst. Das Verfahren wird mit einer Sende-/Empfangseinrichtung für ein Bussystem ausgeführt, bei welchem zumindest zeitweise ein exklusiver, kollisionsfreier Zugriff einer Teilnehmerstation auf einen Bus des Bussystems gewährleistet ist, wobei das Verfahren die Schritte aufweist: Senden, mit einer Sendestufe der Sende-/Empfangseinrichtung, eines Sendesignals an eine erste Busader eines Busses des Bussystems, Senden, mit der Sendestufe der Sende-/Empfangseinrichtung, des Sendesignals an eine zweite Busader des Busses, und Dämpfen, mit einem Schwingungsreduktionsmodul, einer Schwingung einer Schwingung eines sich an Anschlüssen für die Busadern einstellenden Bussignals, wenn die Sende-/Empfangseinrichtung als Sender des Sendesignals agiert, wobei ein erster Widerstand des Schwingungsreduktionsmoduls zwischen die erste Busader und einen Anschluss für Masse geschaltet wird, wie in Anspruch 13 beschrieben. Zudem ist es möglich, dass ein zweiter Widerstand des Schwingungsreduktionsmoduls zwischen die zweite Busader und einen Anschluss für eine Spannungsversorgung des Bussystems geschaltet wird, wie in Anspruch 14 beschrieben.

Die zuvor genannte Aufgabe wird zudem durch ein Verfahren zur Reduzierung von Schwingungen einer Busdifferenzspannung bei eingekoppelten Störungen mit den Merkmalen von Anspruch 15 gelöst. Das Verfahren wird mit einer Sende-/Empfangseinrichtung für ein Bussystem ausgeführt, bei welchem zumindest zeitweise ein exklusiver, kollisionsfreier Zugriff einer Teilnehmerstation auf einen Bus des Bussystems gewährleistet ist, wobei das Verfahren die Schritte aufweist: Senden, mit einer Sendestufe der Sende-/Empfangseinrichtung, eines Sendesignals an eine erste Busader eines Busses des Bussystems, Senden, mit der Sendestufe der Sende-/Empfangseinrichtung, des Sendesignals an eine zweite Busader des Busses, und Dämpfen, mit einem Schwingungsreduktionsmodul, einer Schwingung einer Schwingung eines sich an Anschlüssen für die Busadern einstellenden Bussignals, wenn die Sende-/Empfangseinrichtung als Sender des Sendesignals agiert, wobei ein Widerstand des Schwingungsreduktionsmoduls zur Dämpfung der Schwingung zwischen die erste Busader und die zweite Busader geschaltet wird, wie in Anspruch 15 beschrieben.

Das Verfahren bietet dieselben Vorteile, wie sie zuvor in Bezug auf die Sende-/Empfangseinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein elektrisches Schaltbild einer Sende-/Empfangseinrichtung des Bussystems gemäß dem ersten Ausführungsbeispiel;
Fig. 3 einen zeitlichen Verlauf einer Differenzspannung VDIFF der Bussignale CAN_H und CAN_L bei der Sende-/Empfangseinrichtung von Fig. 2, wenn keine hochfrequente Störung auftritt, wobei das Schwingungsreduktionsmodul erst vor dem zweiten Wechsel von dem rezessiven Buszustand zu dem dominanten Buszustand eingeschaltet wird;
Fig. 4 einen zeitlichen Verlauf einer Differenzspannung VDIFF der Bussignale CAN_H und CAN_L bei der Sende-/Empfangseinrichtung von Fig. 2, wenn eine hochfrequente Störung auftritt, wobei das Schwingungsreduktionsmodul erst vor dem zweiten Wechsel von dem rezessiven Buszustand zu dem dominanten Buszustand eingeschaltet wird;
Fig. 5 ein elektrisches Schaltbild einer Sende-/Empfangseinrichtung eines Bussystems gemäß einem zweiten Ausführungsbeispiel;
Fig. 6 ein elektrisches Schaltbild einer Sende-/Empfangseinrichtung eines Bussystems gemäß einem dritten Ausführungsbeispiel; und
Fig. 7 ein Schaubild zur Veranschaulichung des Aufbaus einer Nachricht, die von einer Teilnehmerstation des Bussystems gemäß dem dritten Ausführungsbeispiel gesendet wird.

In den Figuren sind gleiche oder funktionsgleiche Elemente, sofern nichts Anderes angegeben ist, mit denselben Bezugszeichen versehen.

### Beschreibung der Ausführungsbeispiele

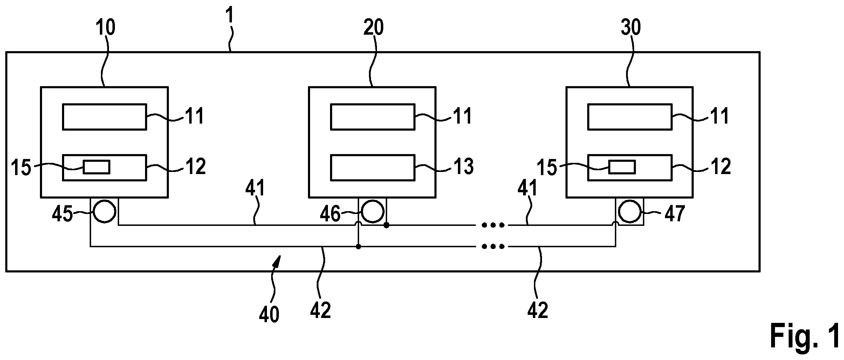

Fig. 1 zeigt ein Bussystem 1, das beispielsweise zumindest abschnittsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46, 47 in der Form von Signalen zwischen den einzelnen Teilnehmerstationen 10, 20, 30 übertragbar. Die Teilnehmerstationen 10, 20, 30 sind beispielsweise Steuergeräte oder Anzeigevorrichtungen eines Kraftfahrzeugs.

Wie in Fig. 1 gezeigt, haben die Teilnehmerstationen 10, 30 jeweils eine Kommunikationssteuereinrichtung 11 und eine Sende-/Empfangseinrichtung 12. Die Sende-/Empfangseinrichtungen 12 umfassen jeweils ein Schwingungsreduktionsmodul 15. Die Teilnehmerstation 20 hat dagegen eine Kommunikationssteuereinrichtung 11 und eine Sende-/Empfangseinrichtung 13. Die Sende-/Empfangseinrichtungen 12 der Teilnehmerstationen 10, 30 und die Sende-/Empfangseinrichtung 13 der Teilnehmerstation 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Sende-/Empfangseinrichtung 12 dient zum Senden der Nachrichten 45, 47 in Form von Signalen und nutzt hierbei das Schwingungsreduktionsmodul 15, wie später noch ausführlicher beschrieben. Die Kommunikationssteuereinrichtung 11 kann insbesondere wie ein herkömmlicher CAN-FD-Controller und/oder CAN-Controller ausgeführt sein. Die Sende-/Empfangseinrichtung 13 kann insbesondere wie ein herkömmlicher CAN-Transceiver und/oder CAN-FD-Transceiver ausgeführt sein. Die Sende-/Empfangseinrichtung 13 kann insbesondere wie ein herkömmlicher CAN-Transceiver ausgeführt sein.

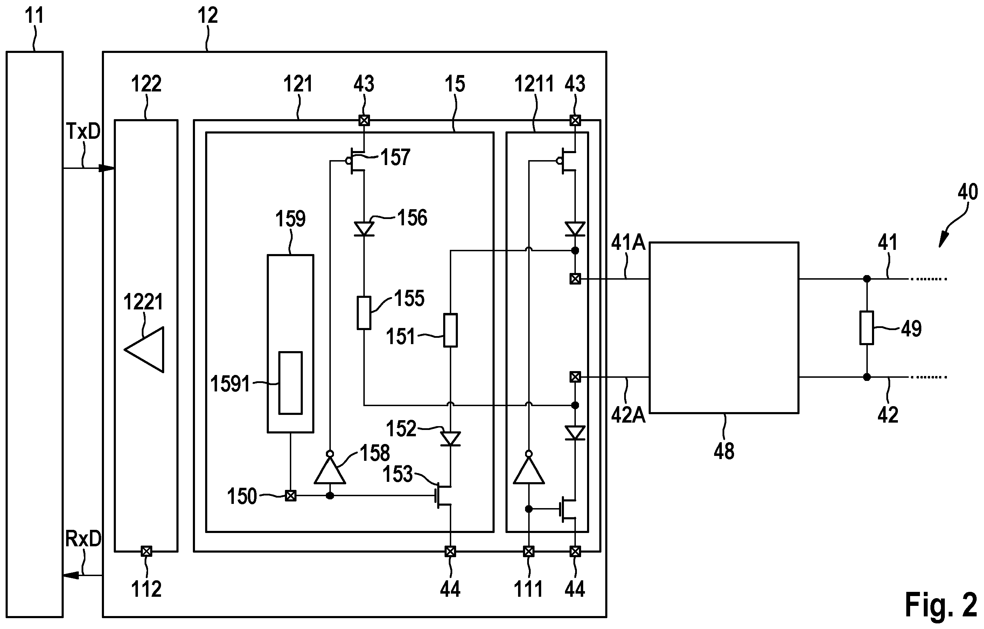

Fig. 2 zeigt den grundlegenden Aufbau der Sende-/Empfangseinrichtung 12 mit dem Schwingungsreduktionsmodul 15. Die Sende-/Empfangseinrichtung 12 ist mit Anschlüssen 41A, 42A an den Bus 40, genauer gesagt dessen erste Busader 41 für CAN_H und dessen zweite Busader 42 für CAN_L angeschlossen. Die Spannungsversorgung, insbesondere CAN-Supply, für die erste und zweite Busader 41, 42 erfolgt über einen Anschluss 43. Der Anschluss an Masse bzw. CAN_GND ist über einen Anschluss 44 realisiert. Zwischen die Anschlüsse 41A, 42A und die erste und zweite Busader 41, 42 ist eine Gleichtaktdrossel 48 geschaltet, die auch Common-Mode-Choke genannt wird. Die Gleichtaktdrossel 48 bewirkt. Insbesondere eine Verringerung der Abstrahlung von Hochfrequenzenergie und Störungen des Radioempfangs durch den Bus 40. Die erste und zweite Busader 41, 42 sind mit einem Abschlusswiderstand 49 terminiert.

Die erste und zweite Busader 41, 42 sind in der Sende-/Empfangseinrichtung 12 mit einer Sendestufe 121 verbunden, die auch als Transmitter bezeichnet wird. Außerdem sind die erste und zweite Busader 41, 42 in der Sende-/Empfangseinrichtung 12 auch mit einer Empfangsstufe 122 verbunden, die auch als Receiver bezeichnet wird. Hierfür hat die Empfangsstufe 122, wie herkömmlich üblich einen Empfangskomparator 1221, der mit dem Bus 40 verbunden ist, auch wenn dies in Fig. 2 zur Vereinfachung nicht dargestellt ist.

Die genaue Anschaltung zum Treiben eines digitalen Sendesignals TxD von der Kommunikationssteuereinrichtung 11 über einem Anschluss 111 erfolgt wie herkömmlich üblich. Außerdem erfolgt die Anschaltung zum Treiben eines Empfangssignals RxD über einen Anschluss 112 zu der Kommunikationssteuereinrichtung 11 wie herkömmlich üblich. Daher ist diese Anschaltung in Fig. 2 zur Vereinfachung nicht dargestellt. Das digitale Empfangssignal RxD wurde mit der Empfangsstufe 122 aus dem von den Busadern 41, 42 empfangenen Signal erzeugt.

Gemäß Fig. 2 hat die Sendestufe 121 einen herkömmlichen Treiber 1211 für die Signale für die erste und zweite Busader 41, 42. Zudem ist in die Sendestufe 121 das Schwingungsreduktionsmodul 15 eingebaut oder daran angeschlossen. Die Funktionalität des Schwingungsreduktionsmoduls 15 ist bei der Sende-/Empfangseinrichtung 12 nur aktiv, wenn die Sende-/Empfangseinrichtung 12 selbst sendet bzw. als Sender agiert. Um zu bestimmen, ob die Sende-/Empfangseinrichtung 12 als Sender agiert, kann insbesondere die Auswertung des Sendesignals TxD vorgenommen werden.

Das Schwingungsreduktionsmodul 15 umfasst einen Anschluss 150 zum Einschalten oder Ausschalten des Schwingungsreduktionsmoduls 15. Zudem hat das Schwingungsreduktionsmodul 15 einen ersten Widerstand 151, eine erste Diode 152, die eine erste Drain-Bulk-Diode eines MOSFETs des Halbleitersubstrats der Sendestufe 121 sein kann, und einen ersten Transistor 153 als Schalter für die erste Busader 41. Außerdem hat das Modul 15 einen zweiten Widerstand 155, eine zweite Diode 156, die eine zweite Drain-Bulk-Diode eines MOSFETs des Halbleitersubstrats der Sendestufe 121 sein kann, und einen zweiten Transistor 157 als Schalter für die zweite Busader 42. Darüber hinaus hat das Schwingungsreduktionsmodul 15 einen Inverter 158 und einen Hochfrequenzdetektor 159, dessen Ausgang an den Anschluss 150 geschaltet ist. Der Eingang des Hochfrequenzdetektors 159 ist mit dem Bus 40 verbunden, auch wenn dies in Fig. 2 zur Vereinfachung der Zeichnung nicht dargestellt ist. Der Ausgang des Hochfrequenzdetektors 159 ist mit dem Steueranschluss des Transistors 153 verbunden.

Genauer gesagt, umfasst das Schwingungsreduktionsmodul 15 für die erste Busader 41 einen ersten Widerstand 151, eine erste Diode 152 und einen ersten Transistor 153, die in der genannten Reihenfolge in Reihe geschaltet sind. Außerdem umfasst das Schwingungsreduktionsmodul 15 für die zweite Busader 42 einen zweiten Widerstand 155, eine zweite Diode 156 und einen zweiten Transistor 157, die in der genannten Reihenfolge in Reihe geschaltet sind.

Der erste Widerstand 151 ist an seinem einen Ende an die erste Busader 41, also bei dem vorliegenden Ausführungsbeispiel an CAN_H angeschlossen. Ein Ende des Transistors 153 ist über den Anschluss 44 an Masse bzw. CAN_GND angeschlossen. Der Transistor 153 kann beispielsweise als Metall-Isolator-Feldeffekttransistor ausgeführt sein. Insbesondere ist der Transistor 153 ein Metalloxid-Feldeffekttransistor (MOSFET) oder als ein Feldeffekttransistor mit isoliertem Gate ausgeführt, der auch als IGFET bezeichnet wird.

Der zweite Widerstand 155 ist an seinem einen Ende an die zweite Busader 42, also bei dem vorliegenden Ausführungsbeispiel an CAN_L angeschlossen. Ein Ende des Transistors 157 ist über den Anschluss 43 mit der Spannungsversorgung für den Bus 40 bzw. für CAN angeschlossen. Der Transistor 157 kann beispielsweise als Metall-Isolator-Feldeffekttransistor ausgeführt sein. Insbesondere ist der Transistor 157 ein Metalloxid-Feldeffekttransistor (MOSFET) oder als ein Feldeffekttransistor mit isoliertem Gate (IGFET) ausgeführt.

Somit ist von CAN_H bzw. der ersten Busader 41 ein Widerstand 151 gegen Masse geschaltet und von CAN_L bzw. der zweiten Busader 42 ein Widerstand 155 hin zur Spannungsversorgung geschaltet, die bei CAN üblicherweise 5V beträgt.

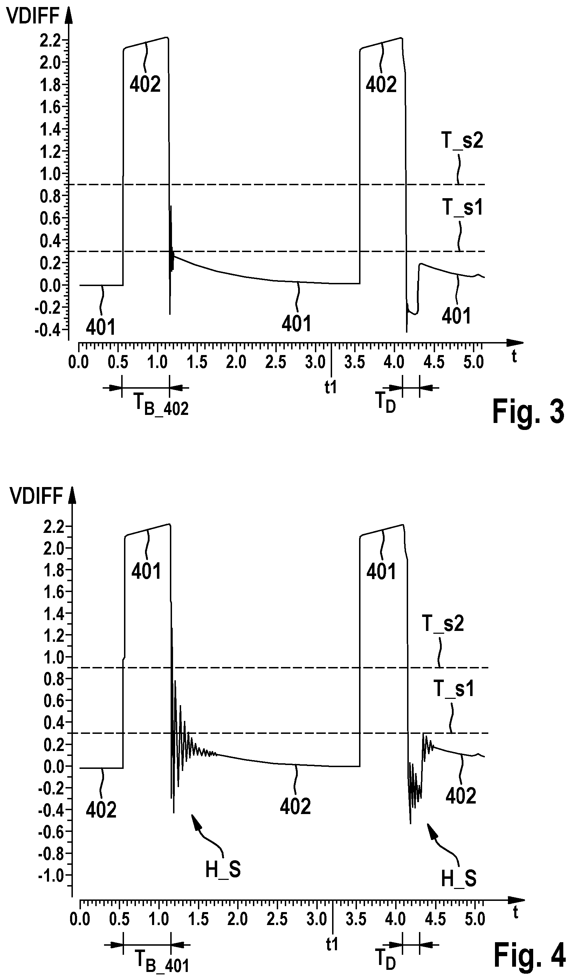

Die Widerstände 151, 155 mit ihrem Widerstandswert R bewirken eine Dämpfung der Schwingneigung der Signale, wie nachfolgend in Bezug auf Fig. 3 und Fig. 4 genauer erläutert.

Im Betrieb des Bussystems 1 erfasst der Hochfrequenzdetektor 159 von Fig. 2 hochfrequente Störungen auf dem Bus 40. Hochfrequente Störungen werden in diesem Zusammenhang als Signale mit Frequenzen verstanden, deren Periodendauer kleiner als eine Bitzeitdauer T_{B_402} bzw. T_{B_401} gemäß Fig. 3 bzw. Fig. 4 ist bzw. in einem Bereich von ca. 5 MHz bis ca. 50 MHz liegen. Der Hochfrequenzdetektor 159 kann hierfür mindestens ein Filter aufweisen, insbesondere einen Hochpass und/oder einen Tiefpass und/oder einen Bandpass. Der Hochfrequenzdetektor 159 umfasst ein Zeitglied 1591, das ein Einschalten des Schwingungsreduktionsmoduls 15 über den Anschluss 150 und damit eine Bedämpfung des Busses 40 nur für einen kurzen Zeitraum T_{D} nach der Dominant-Rezessiv-Flanke ermöglicht, wie in Fig. 3 bzw. Fig. 4 gezeigt. Der Zeitraum T_{D} ist nicht größer als 100ns. Dadurch wird sichergestellt, dass die anderen Teilnehmerstationen 20, 30 weiter kommunizieren können.

Das Schwingungsreduktionsmodul 15 hat durch den zuvor beschriebenen Aufbau den Vorteil, dass das Modul 15 die Busspannung nicht nur auf 0V senken kann, sondern dass die Busspannung aufgrund des Moduls 15 sogar negativ wird, wie aus Fig. 3 und Fig. 4 hervorgeht. Dies vergrößert die Störfestigkeit der Sende-/Empfangseinrichtung 12 noch mehr und bringt damit einen zusätzlichen Vorteil.

Fig. 3 zeigt einen zeitlichen Verlauf einer Differenzspannung VDIFF = CAN_H - CAN_L zwischen den Busadern 41, 42 bzw. 41A, 41B bei der Sende-/Empfangseinrichtung 12 gemäß dem vorliegenden Ausführungsbeispiel. Das Signal von Fig. 3 stellt sich in Folge eines Sendesignals TxD ein, das von einer der Teilnehmerstationen 10, 20, 30 auf den Bus 40 gesendet wurde. Bei dem Beispiel von Fig. 3 ist keine hochfrequente Störstrahlung vorhanden. Das Signal von Fig. 3 stellt sich ein, wenn das Schwingungsreduktionsmodul 15 zunächst ausgeschaltet ist und erst ab einem Zeitpunkt t1 eingeschaltet wird.

Bei der Differenzspannung VDIFF von Fig. 3 finden im Laufe der Zeit t nacheinander zwei Zustandswechsel von einem ersten Buszustand 401 zu einem zweiten Buszustand 402 und dann wieder zurück zu dem ersten Buszustand 401 statt. Hierbei dauert bei dem Beispiel von Fig. 3 der zweite Buszustand 402 jeweils nur ein Bit des Sendesignals TxD, wobei sich in dem Signal von Fig. 3 eine Bitzeitdauer T_{B_402} für den zweiten Buszustand 402 einstellt. Der erste Buszustand 401 kann auch als Rezessivzustand oder hoher Pegel der Signale CAN_H, CAN_L bezeichnet werden. Der zweite Buszustand 402 kann auch als Dominantzustand oder niedriger Pegel der Signale CAN_H, CAN_L bezeichnet werden.

Die Bitzeitdauer T_{B_402} für einen dominanten Buszustand 402 sollte idealerweise gleich einer Bitzeitdauer T_{B_401} für einen rezessiven Buszustand 401 sein. Liegt die Differenzspannung VDIFF von Fig. 3 bei einem Abtastpunkt des Buszustands unterhalb einer Empfangsschwelle T_s1 der Empfangsstufe 122, erkennt die Empfangsstufe 122 den Buszustand als rezessiven Buszustand 401. Bei dem Beispiel von Fig. 3 liegt die Empfangsschwelle T_s1 bei 0, 3 V. Liegt die Differenzspannung VDIFF von Fig. 3 bei einem Abtastpunkt des Buszustands oberhalb einer Empfangsschwelle T_s2 der Empfangsstufe 122, erkennt die Empfangsstufe 122 den Buszustand als dominanten Buszustand 402.

Gemäß Fig. 3 hat die Differenzspannung VDIFF auf der linken Seite von Fig. 3, also vor dem Zeitpunkt t1, beim Übergang vom Zustand 402 zu dem Zustand 401 ein deutlich größeres Überschwingen als auf der rechten Seite von Fig. 3, also nach dem Zeitpunkt t1. Das Schwingungsreduktionsmodul 15, das bei dem Zeitpunkt T1 eingeschaltet wurde, bewirkt also eine deutliche Dämpfung des Überschwingens beim Übergang von dem Zustand 402 zu dem Zustand 401. Hierbei sind die Widerstände 151, 155 des Schwingungsreduktionsmoduls 15 derart dimensioniert, dass beim Übergang von dem Zustand 402 zu dem Zustand 401 eine negative Differenzspannung VDIFF von bis zu -0,5 V auftritt. Hierfür haben die Widerstände 151, 155 in etwa einen Wert von 150 Ohm. Selbstverständlich sind andere Werte für die Widerstände 151, 155 wählbar.

Fig. 4 zeigt im Vergleich dazu einen zeitlichen Verlauf einer Differenzspannung VDIFF = CAN_H - CAN_L zwischen den Busadern 41, 42 bei der Sende-/Empfangseinrichtung 12 gemäß dem vorliegenden Ausführungsbeispiel, wenn hochfrequente Störstrahlung H_S vorhanden ist. Das Signal von Fig. 4 stellt sich ein, wenn das Schwingungsreduktionsmodul 15 zunächst ausgeschaltet ist und erst ab dem Zeitpunkt t1 eingeschaltet wird, wie bei dem Beispiel von Fig. 3.

Wie in dem linken Teil von Fig. 4 gezeigt, liegt nun die Differenzspannung VDIFF von Fig. 4 aufgrund der Störstrahlung H_S direkt nach dem Übergang vom Zustand 402 zu dem Zustand 401 für eine deutlich längere Zeitdauer oberhalb der Empfangsschwelle T_s1 der Empfangsstufe 122. Somit hat die Differenzspannung VDIFF auf der linken Seite von Fig. 4, also vor dem Zeitpunkt t1, bei dem das Schwingungsreduktionsmodul 15 eingeschaltet wird, nach dem Übergang vom Zustand 402 zu dem Zustand 401 ein deutlich größeres Überschwingen als auf der rechten Seite von Fig. 4, also nach dem Zeitpunkt t1.

Das Schwingungsreduktionsmodul 15 bewirkt somit auch bei Störeinstrahlung H_S eine deutliche Dämpfung des Überschwingens beim Übergang von dem Zustand 402 zu dem Zustand 401. Durch die Dimensionierung der Widerstände 151, 155 des Schwingungsreduktionsmoduls 15 wie bei dem Beispiel von Fig. 3, tritt beim dem Übergang von dem Zustand 402 zu dem Zustand 401 eine negative Differenzspannung VDIFF von bis zu ca. -0,6 V auf.

Im Ergebnis kann das Schwingungsreduktionsmodul 15 die Störfestigkeit der Sende-/Empfangseinrichtung 12 gemäß dem vorliegenden Ausführungsbeispiel signifikant erhöhen. Somit kann bei überlagerter hochfrequenter Störung die meist übliche Dominant-Empfangsschwelle T_s2 von 0,9 V nicht fälschlich überschritten werden. Dies gilt auch, wenn die Schwellwertspannung bzw. Empfangsschwelle T_s1 der Empfangsstufe 122 für die Bewertung eines Buszustands als rezessiven Buszustand 401 auf den üblichen Wert von T_s1 = 0,5 V eingestellt ist oder sogar auf einen Wert von T_s1 = 0,3 V wie in Fig. 3 und Fig. 4 veranschaulicht. In solchen Fällen übersieht die Empfangsstufe 122 auch bei einem Zustandswechsel von dem Zustand 402 auf den Zustand 401 bzw. von Dominant nach Rezessiv keine Zustandswechsel mehr von dem Zustand 402 auf den Zustand 401 bzw. von Rezessiv nach Dominant.

Somit kann eine Abtastung der Differenzspannung VDIFF zur Erzeugung des Empfangssignals RxD bei dem derzeit üblichen Abtastpunkt AP = x * T_{B_402} sicher zu dem gewünschten Ergebnis führen. Dies gilt, auch wenn sich die Länge der Bitzeit T_{B_402} des Zustands 402 bzw. eines dominanten Bits gegenüber einer herkömmlichen Sende-/Empfangseinrichtung oder der Sende-/Empfangseinrichtung 13 der Teilnehmerstation 20 etwas verlängern sollte, wie aus Fig. 3 und Fig. 4 ersichtlich. Zur Festlegung des Abtastpunkts gilt, dass x insbesondere ungefähr gleich 0,75 ist. Alternativ kann die Sende-/Empfangseinrichtung im Betrieb des Bussystems 1 in der Arbitrationsphase (niedrigere Bitrate) den Wert für x ermitteln, um den Abtastpunkt der Bits für die folgende Datenphase (höhere Bitrate = schnellere Datenübertragung) an die derzeit geltenden Betriebsbedingungen anzupassen.

Somit hat die Sende-/Empfangseinrichtung 12 gemäß dem vorliegenden Ausführungsbeispiel nicht nur bei hochfrequenter Störstrahlung H_S eine geringere Schwingneigung als eine herkömmliche Sende-/Empfangseinrichtung bzw. die Sende-/Empfangseinrichtung 13.

Daher wird mit der Sende-/Empfangseinrichtung 12 ein Verfahren zur Reduzierung einer Schwingneigung beim Übergang zwischen unterschiedlichen Buszuständen durchgeführt. Die Schwingung aufgrund eines Übergangs zwischen unterschiedlichen Buszuständen wird mit dem Schwingungsreduktionsmodul 15 deutlich gedämpft und somit reduziert.

Bei dem beschriebenen Ausführungsbeispiel haben nur die Teilnehmerstationen 10, 30 die Funktionalität der Sende-/Empfangseinrichtung 12. Die Teilnehmerstationen 10, 30 sind vorzugsweise Teilnehmerstationen oder Knoten mit hoher Schwingneigung und/oder Teilnehmerstationen oder Knoten, bei denen eine hohe Störfestigkeit gegen hochfrequente Strahlung H_S benötigt wird. Die hohe Schwingneigung der Teilnehmerstationen 10, 30 kann sich insbesondere durch deren Position im Bussystem 1, die Position der Terminationswiderstände 49, die Stub-Länge bzw. Stichleitungslänge zu den Teilnehmerstationen 10, 30, usw. ergeben.

Noch dazu ermöglicht die beschriebene Sende-/Empfangseinrichtung 12 auch den Einsatz von Bulk-Silizium-Technologien. Bei derartigen Technologien kann durch die Konstruktion der Sende-/Empfangseinrichtung 12 selbst bei hohen Störpegeln der Strahlung H_S, die beim Eingreifen von ESD-Strukturen wie der Drossel 48 auftreten, die Dominant-zu-Rezessiv-Flanke des Differenzsignals VDIFF zeitlich stabil gehalten werden. Die Sende-/Empfangseinrichtung 12 verhindert, dass ein Entstromen der Verpolschutzdioden in der CAN-FD-Sendestufe 121 abrupte Stromabrisse verursacht, welche dann die Drossel 48 mit ihren parasitären Kapazitäten zum Schwingen anregen. Diese Schwingungen würden zu einem hohen Jitter der Dominant-zu-Rezessiv-Flanke am Ausgang der Empfangsstufe 122 führen. Unter Umständen würde die Empfangsstufe 122 dabei sogar einen kurzen Dominant-Spitze bzw. -Spike erkennen, was ebenfalls zu einem Fehler und damit zu geringerer Störfestigkeit führt.

Gemäß einer Modifikation des ersten Ausführungsbeispiels hat auch die Teilnehmerstation 20 anstelle einer Sende-/Empfangseinrichtung 13 eine Sende-/Empfangseinrichtung 12. In diesem Fall ist die zuvor beschriebene Funktionalität der Sende-/Empfangseinrichtung 12 für alle Teilnehmerstationen 10, 20, 30 des Bussystems aktiv, insbesondere je nach Bedarf.

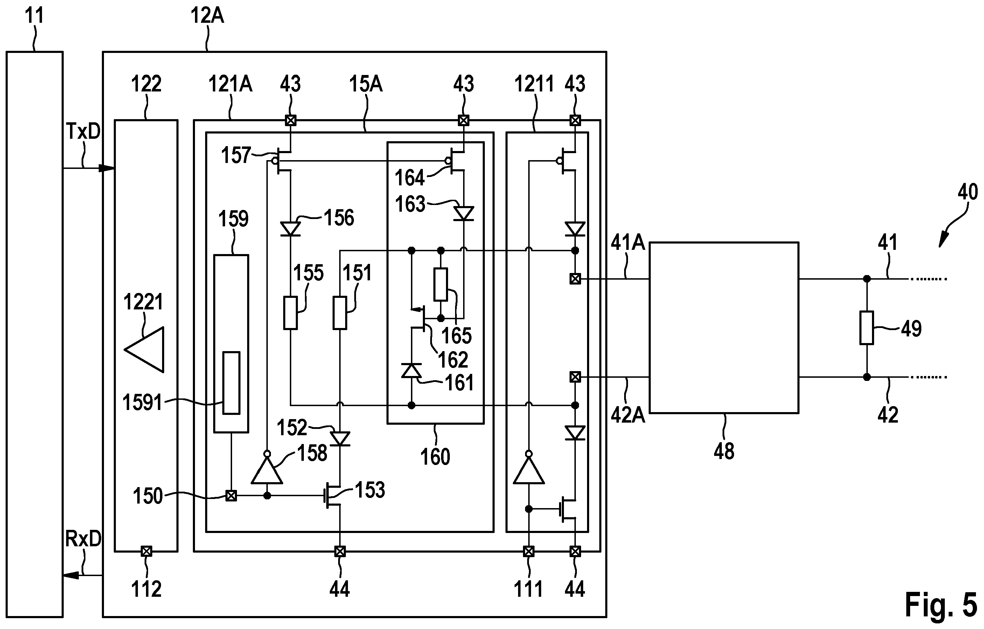

Fig. 5 zeigt den grundlegenden Aufbau einer Sende-/Empfangseinrichtung 12A, die eine Sendestufe 121A und ein Schwingungsreduktionsmodul 15A gemäß einem zweiten Ausführungsbeispiel aufweist. Das Bussystem 1 und die Sende-/Empfangseinrichtung 12A sind bis auf die nachfolgend beschriebenen Unterschiede auf die gleiche Weise aufgebaut, wie zuvor gemäß dem vorangehenden Ausführungsbeispiel oder seinen Modifikationen für das Bussystem 1 und die Sende-/Empfangseinrichtung 12 beschrieben.

Das Schwingungsreduktionsmodul 15A hat zusätzlich einen Schaltungsblock 160, der eine schaltbare Spannungsbegrenzung der Differenzspannung VDIFF bei dem Übergang von dem Zustand 402 zu dem Zustand 401 realisiert. Insbesondere ist die schaltbare Spannungsbegrenzung der Differenzspannung VDIFF eine negative Differenzspannung VDIFF = -0,6 V.

Bei dieser Variante sind die Widerstände 151, 155 kleiner als 150 Ohm, beispielsweise 50 Ohm. Die Differenzspannung VDIFF auf dem Bus 40 wird mittels einer schaltbaren Diode 161 während des Bedämpfungsvorgangs bei dem Übergang von dem Zustand 402 zu dem Zustand 401 auf -0,6V begrenzt. Die Diode 161 ist mittels eines Schalters 162 schaltbar, der als Transistor ausführbar ist. Der Transistor bzw. Schalter 162 kann wie einer der Transistoren ausgeführt sein, die zuvor in Bezug auf das erste Ausführungsbeispiel genannt sind. Der Schalter 162 ist in Reihe zu der Diode 161 geschaltet. Zudem ist zum Anschluss 43 für die Spannungsversorgung hin eine Verpolschutzdiode 163 und ein Schalter 164 vorhanden. Der Schalter 164 ist als Transistor in der Art ausführbar, wie zuvor in Bezug auf das erste Ausführungsbeispiel genannt. Zwischen Gate-Anschluss und Source-Anschluss des Schalters 162 ist ein Widerstand 165 geschaltet.

Zum Ansteuern des Schalters 162 öffnet der PMOS-Schalter 164 bzw. der PMOS-Transistor 164, so dass elektrischer Strom durch die Diode 163 fließt. Der elektrische Strom von der Diode 163 erzeugt über den Gate-Source-Widerstand 165 an dem NMOS-Schalter 162 eine positive Gate-Source-Spannung, welche den NMOS-Schalter 162 öffnet und VDIFF = CAN_H - CAN_L auf die Flussspannung der Diode 161 klammert. Die Flussspannung der Diode 161 beträgt insbesondere ca. 0,6 V. Der Steuerstrom aus dem Transistor 164 fließt dann über den Widerstand 151 und die Verpolschutzdiode 152 und den NMOS-Transistor 153 gegen CAN_GND ab. Dabei wird der Steuerstrom für den Schalter 164 so eingestellt, dass über die Reihenschaltung aus 151, 152, 153 der Gleichtaktpegel von 2,5 V auf dem Bus 40 eingestellt wird. Der Gate-Source-Widerstand 165 ist derart gewählt, dass sich gerade so die maximal mögliche Gate-Source-Spannung über den Schalter 162 bildet. Der Widerstandswert des Widerstands 155 wird somit etwas größer als der Widerstandswert des Widerstands 151 gewählt. Der elektrische Strom durch den Widerstand 155 wird genau um den Betrag des Steuerstroms durch 164, 163 und den Widerstand 165 über den Gate-Anschluss und Source-Anschluss des Schalters 162 kleiner sein als der Strom durch den Widerstand 151.

Die Schaltung 160 hat den Vorteil, dass bei den Signalen von Fig. 3 und Fig. 4 noch schneller der rezessive Buszustand 401 erreicht wird. Zudem ermöglicht die beschriebene Sende-/Empfangseinrichtung 12B auch den Einsatz von Bulk-Silizium-Technologien. Nachteilig an der Schaltung 160 ist jedoch, dass der Schalter 162 angesteuert werden muss und dass die Verpolschutzdiode 163 berücksichtigt werden muss.

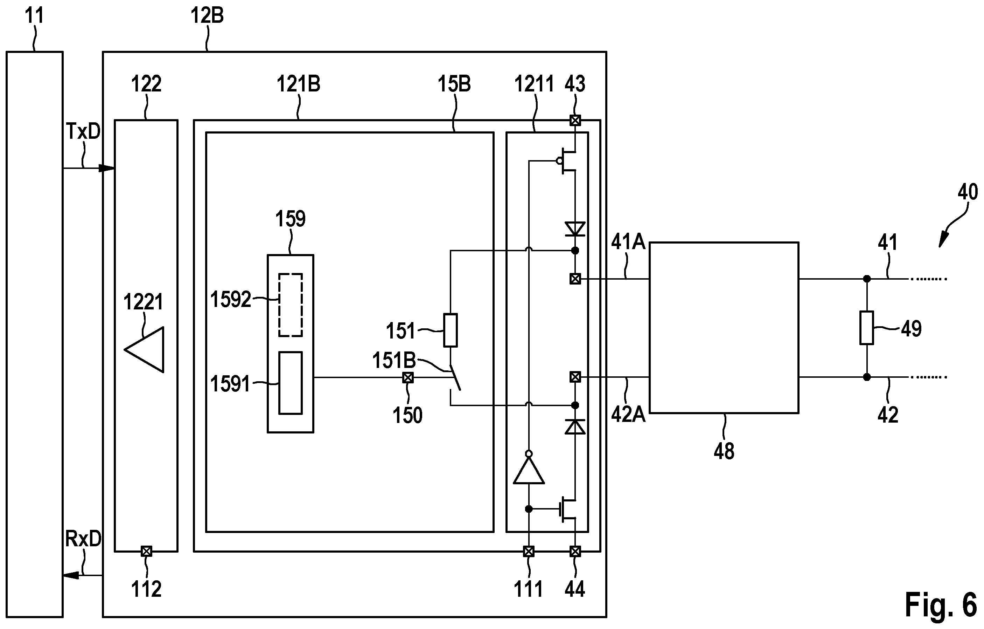

Fig. 6 zeigt den grundlegenden Aufbau einer Sende-/Empfangseinrichtung 12B, die eine Sendestufe 121B und ein Schwingungsreduktionsmodul 15B gemäß einem zweiten Ausführungsbeispiel aufweist. Das Bussystem 1 und die Sende-/Empfangseinrichtung 12B sind bis auf die nachfolgend beschriebenen Unterschiede auf die gleiche Weise aufgebaut, wie zuvor gemäß dem vorangehenden Ausführungsbeispiel oder seinen Modifikationen für das Bussystem 1 und die Sende-/Empfangseinrichtung 12 beschrieben.

Das Schwingungsreduktionsmodul 15B hat anstelle von zwei Widerständen 151, 155 und deren Verschaltung nur einen Widerstand 151, der mit einem Schalter 151B schaltbar ist. Der Widerstand 151 ist in Reihe zu dem Schalter 151B geschaltet. Die Reihenschaltung aus Widerstand 151 und Schalter 151B ist zwischen die Busadern 41, 42 geschaltet. Auch auf diese Weise kann eine Dämpfung der Schwingen bei einem Übergang von dem Zustand 402 zu dem Zustand 401 erzielt werden.

Das Schwingungsreduktionsmodul 15B ist für eine Sende-/Empfangseinrichtung 12B weniger geeignet, die Bulk-Silizium-Technologien verwendet. Der Grund dafür liegt darin, dass sich in dem Substrat der Sende-/Empfangseinrichtung 12B immer eine parasitäre Diode bildet, welche bei hochfrequenter Störstrahlung wiederum zu Gleichrichteffekten führt.

Optional hat der Hochfrequenzdetektor 159 einen nur schematisch veranschaulichten Kommunikationsphasen-Erfassungsblock 1592, der dem Zeitglied 1591 vorgeschaltet ist. Aufgrund des Blocks 1592 kann der Schalter 151B abhängig von den unterschiedlichen Phasen einer Kommunikation auf dem Bus 40 betätigt werden. Hierbei kann der Kommunikationsphasen-Erfassungsblock 1592 das Zeitglied 1591 nur freigeben bzw. die Dämpfung des Schwingungsreduktionsmoduls 15B nur ein- oder ausschalten, wenn die Datenphase einer Nachricht 45, 46, 47 vorliegt.

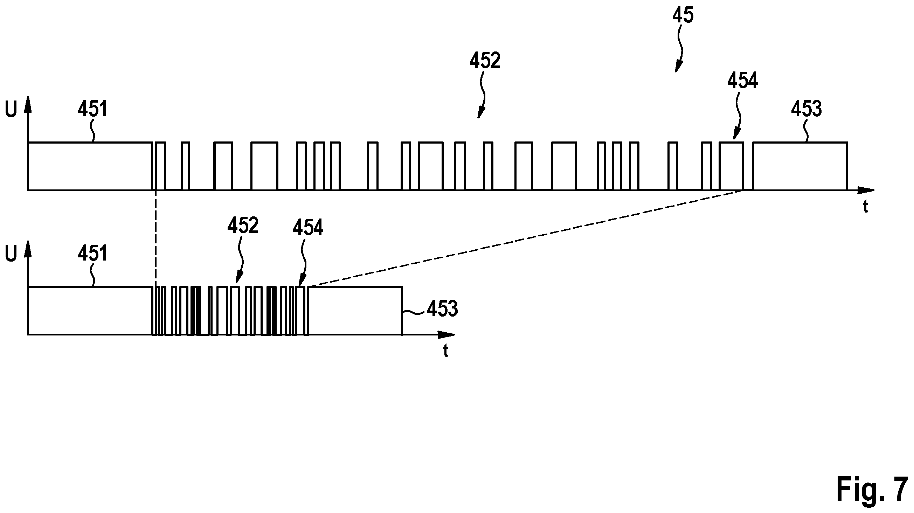

Die unterschiedlichen Phasen einer Kommunikation können von dem Kommunikationsphasen-Erfassungsblock 1592 erfasst und erkannt oder unterschieden werden, wie anhand von Fig. 7 genauer beschrieben. Der Kommunikationsphasen-Erfassungsblock 1592 kann stattdessen Teil der Empfangsstufe 122 oder Teil des Schwingungsreduktionsmoduls 15B sein.

Der Kommunikationsphasen-Erfassungsblock 1592 kann beispielsweise einen Differenzverstärker aufweisen, dessen Eingänge parallel zu den Eingängen des Empfangskomparators 1221 der Empfangsstufe 122 geschaltet sind. Zumindest ein Ausgang des Erfassungsblocks 1592 ist zur Ansteuerung des Schalters 151B verwendbar.

Fig. 7 zeigt in ihrem oberen Teil anhand der Nachricht 45 einen CAN-Rahmen, wie er von der Sende-/Empfangseinrichtung 12, 12A, 12B oder der Sende-/Empfangseinrichtung 13 gesendet wird, und in ihrem unteren Teil einen CAN-FD-Rahmen, wie er von der Sende-/Empfangseinrichtung 12, 12A, 12B gesendet werden kann. Der CAN-Rahmen und der CAN-FD-Rahmen sind für die CAN-Kommunikation auf dem Bus 40 grundlegend in zwei unterschiedliche Kommunikationsphasen unterteilt, nämlich die Arbitrationsphasen 451, 453 und einen Datenbereich 452, der bei CAN-HS auch Datenfeld bzw. bei CAN-FD auch Datenphase genannt wird. Der Datenbereich 452 ist an seinem Ende mit mindestens einem Endebit 454 abgeschlossen, das auch EOF-Bit genannt wird, wobei EOF für End of Frame bzw. Ende der Nachricht steht. Bei CAN oder CAN FD ist das EOF eine Bitabfolge aus 11 rezessiven Bits, also Bits mit dem zweiten Buszustand 402.

Bei CAN-FD wird im Vergleich zum klassischen CAN am Ende der Arbitrationsphase 451 die Bitrate für die folgende Datenphase auf z. B. 2, 4, 8 Mbit pro Sekunde (Mbps) erhöht. Damit gilt, dass bei CAN-FD die Bitrate in den Arbitrationsphasen 451, 453 kleiner als die Bitrate im Datenbereich 452 ist. Bei CAN-FD ist der Datenbereich 452 gegenüber dem Datenbereich 452 des CAN-Rahmens deutlich verkürzt.

Die Arbitrationsphasen 451, 453 sind ein wichtiger Bestandteil eines CAN-Rahmens und eines CAN-FD-Rahmens bzw. der Nachrichten 45, 46, 47, die in Fig. 1 gezeigt sind. Dabei wird entschieden, welcher Knoten bzw. welche Teilnehmerstation 10, 20, 30 des Bussystems 1 die wichtigste Nachricht 45, 46, 47 trägt. Die Teilnehmerstation 10, 20, 30 mit der wichtigsten Nachricht 45, 46, 47 gewinnt die Arbitration und darf daher die Nachricht nach Abschluss der Arbitrationsphase senden. Alle anderen Teilnehmerstationen sind dann beim Übertragen dieser wichtigsten Nachricht Zuhörer, also nur Empfänger.

Der Kommunikationsphasen-Erfassungsblock 1592 kann die Arbitrationsphasen 451, 453, den Datenbereich 452 sowie das Ende des Datenbereichs 453, also das Endebit (EOF) 454 erkennen. Dadurch kann die Funktionalität des Schwingungsreduktionsmoduls 15B je nach Wunsch entweder für alle Kommunikationsphasen 451 bis 453 oder Phasen/Bereiche einer Nachricht 45 gelten oder nur bei abgeschlossener Arbitration, also für den Datenbereich 452. Letzteres ist sinnvoll, wenn ansonsten zu viele Teilnehmerstationen 10, 20, 30 gleichzeitig beim Arbitrieren die Funktion der Sende-/Empfangseinrichtung 12B aktivieren können und damit den effektiven Buswiderstand zu stark reduzieren.

Gemäß einem vierten Ausführungsbeispiel ist es möglich, dass die Kommunikationssteuereinrichtung 11 einer der Sende-/Empfangseinrichtungen 12, 12A, 12B des vorangehenden Ausführungsbeispiels ein Steuersignal sendet, um die Dämpfung der Module 15, 15A, 15B zu aktivieren. In diesem Fall müsste die Kommunikationssteuereinrichtung 11 zusätzlich zu den Anschlüssen 111, 112 für die Signale TxD, RxD einen zusätzlichen Anschluss für ein Steuersignal aufweisen.

Zur Erzeugung des Steuersignals kann die Kommunikationssteuereinrichtung 11 den Busverkehr auf den Busadern 41, 42 überwachen, indem die Kommunikationssteuereinrichtung 11 das am Anschluss 111 gesendete Sendesignal TxD und das am Anschluss 112 empfangene, und bei Bedarf zwischengespeicherte, Empfangssignal RxD miteinander vergleicht. Treten im rezessiven Buszustand, also dem ersten Buszustand 401, Abweichungen zwischen den beiden Signalen TxD, RxD auf, wie beispielsweise Zustandswechsel im Empfangssignal RxD, die nicht in dem Sendesignal TxD enthalten waren, so können daraus Rückschlüsse über das Netzwerk bzw. den Bus 40 und die Signalintegrität gezogen werden.

Des Weiteren kann die Kommunikationssteuereinrichtung 11 Informationen, wie Bitrate, Ausbreitungsverzögerung (Propagation-Delay) für beide Schaltvorgänge, also einem Zustandswechsel von dem ersten Buszustand 401 zu dem zweiten Buszustand 402 verwenden, um das des Steuersignals zu erzeugen. Die Informationen können in einem nicht dargestellten Block, insbesondere Speicher, vorgehalten werden.

Auf diese Weise wird die Steuerung der Reduktion der Schwingneigung (Ringing Suppression) nicht von der an die Einrichtung 11 angeschlossenen Sende-/Empfangseinrichtung 12, 12A, 12B gesteuert, sondern von der Kommunikationssteuereinrichtung 11. Hierbei kann die Kommunikationssteuereinrichtung 11 das Schwingungsreduktionsmodul 15, 15A, 15B an die speziellen Eigenschaften der Teilnehmerstation 10 und des Netzwerks bzw. des Busses 40 anpassen. In anderen Worten, die Kommunikationssteuereinrichtung 11 kann das Schwingungsreduktionsmodul 15, 15A, 15B Knoten- und Netzwerk-Sensitiv einstellen. Die Kommunikationssteuereinrichtung 11 bietet damit eine Lernfunktion für die Teilnehmerstation 10.

Damit kann ebenso eine deutliche Reduktion der Schwingneigung bei dem Zustandswechsel vom zweiten Buszustand 402 zum ersten Buszustand 401 realisiert werden. Zudem kann dadurch ein deutlicher Gewinn für das Bussystem 1 als Gesamtsystem erreicht werden.

Alle zuvor beschriebenen Ausgestaltungen der Schwingungsreduktionsmodule 15, 15A, 15B, der Sende-/Empfangseinrichtungen 12, 12A, 12B, der Teilnehmerstationen 10, 20, 30, des Bussystems 1 und des darin ausgeführten Verfahrens gemäß den Ausführungsbeispielen und deren Modifikationen können einzeln oder in allen möglichen Kombinationen Verwendung finden. Zusätzlich sind insbesondere folgende Modifikationen denkbar.

Insbesondere sind der Kommunikationsphasen-Erfassungsblock 1592 und die damit verbundene Funktionalität des Schwingungsreduktionsmoduls 15B bei jedem der Ausführungsbeispiele und deren Modifikationen einsetzbar.

Das zuvor beschriebene Bussystem 1 gemäß den Ausführungsbeispielen und/oder deren Modifikationen ist anhand eines auf dem CAN-Protokoll basierenden Bussystems beschrieben. Das Bussystem 1 gemäß den Ausführungsbeispielen und/oder deren Modifikationen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf die Busleitung 40 oder einen gemeinsamen Kanal der Busleitung 40 gewährleistet ist.

Das Bussystem 1 gemäß den Ausführungsbeispielen und/oder deren Modifikationen ist insbesondere ein CAN-Netzwerk oder ein CAN-HS-Netzwerk oder ein CAN FD-Netzwerk oder ein FlexRay-Netzwerk. Das Bussystem 1 kann jedoch auch ein anderes serielles Kommunikationssetzwerk sein.

Insbesondere kann das Schwingungsreduktionsmodul 15, 15A, 15B bei LVDS (Low Voltage Differential Signaling) eingesetzt werden, der ein Schnittstellen-Standard für eine Hochgeschwindigkeits-Datenübertragung ist, bei welcher ein Sender und ein Empfänger über eine Datenübertragungsstrecke miteinander verbunden sind. LVDS ist standardisiert nach ANSI/TIA/EIA-644-1995.

Die Anzahl und Anordnung der Teilnehmerstationen 10, 20, 30 in dem Bussystem 1 gemäß den Ausführungsbeispielen und/oder deren Modifikationen ist beliebig. Insbesondere können nur Teilnehmerstationen 10 oder Teilnehmerstationen 30 in den Bussystemen 1 der Ausführungsbeispiele und/oder deren Modifikationen vorhanden sein.

Die Funktionalität der zuvor beschriebenen Ausführungsbeispiele und/oder deren Modifikationen lässt sich jeweils in einem Transceiver bzw. einer Sende-/Empfangseinrichtung 12, 12A, 112B bzw. Transceiver oder einem CAN-Transceiver oder einem Transceiver-Chipsatz oder einem CAN-Transceiver-Chipsatz, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) realisiert oder in einer integrierten Gesamtlösung, bei welchem nur ein elektronischer Baustein (Chip) vorhanden ist, eingebettet ist.

## Patentansprüche

1. Sende-/Empfangseinrichtung (12; 12A; 12B) für ein Bussystem (1), mit
einem Anschluss (44) zum Anschluss an Masse,
einem Anschluss (43) zum Anschluss an eine Spannungsversorgung des Bussystems (1),
einem Anschluss (41A) zum Anschluss an eine erste Busader (41),
einem Anschluss (42A) zum Anschluss an eine zweite Busader (42),
einer Sendestufe (121; 121A; 121B) zum Senden eines Sendesignals (TxD) an den Anschluss (41A) für die erste Busader (41) eines Busses (40) des Bussystems (1), bei welchem Bussystem (1) zumindest zeitweise ein exklusiver, kollisionsfreier Zugriff einer Teilnehmerstation (10, 20, 30) auf den Bus (40) des Bussystems (1) gewährleistet ist, und zum Senden des Sendesignals (TxD) an den Anschluss (42A) für die zweite Busader (42) des Busses (40), und
einem Schwingungsreduktionsmodul (15; 15A; 15B) zur Dämpfung einer Schwingung eines sich an den Anschlüssen (41A, 42A) für die Busadern (41, 42) einstellenden Bussignals (VDIFF), wenn die Sende-/Empfangseinrichtung (12;B) als Sender des Sendesignals (TxD) agiert,
wobei das Schwingungsreduktionsmodul (15; 15A; 15B) einen ersten Widerstand (151) aufweist, der mit einem zu dem ersten Widerstand (151) in Reihe geschalteten ersten Schalter (153; 151B) zwischen den Anschluss (41A) für die erste Busader (41) und den Anschluss (44) für Masse schaltbar ist.

2. Sende-/Empfangseinrichtung (12; 12A) nach Anspruch 1,
wobei der erste Schalter (153) ein erster Transistor ist und der erste Widerstand (151) mit dem in Reihe geschalteten ersten Schalter (153) als Schalter für die erste Busader (41) zwischen den Anschluss (41A) für die erste Busader (41) und den Anschluss (44) für Masse schaltbar ist, und
wobei das Schwingungsreduktionsmodul ((15; 15A) einen zweiten Widerstand (155) aufweist, der mit einem zu dem zweiten Widerstand (155) in Reihe geschalteten zweiten Transistor (153) als Schalter (157) für die zweite Busader (42) zwischen den Anschluss (42A) für die zweite Busader (42) und den Anschluss (44) für die Spannungsversorgung des Bussystems (1) schaltbar ist.

3. Sende-/Empfangseinrichtung (12; 12A; 12B) nach Anspruch 2, wobei der erste und zweite Widerstand (151, 155) jeweils einen Wert von etwa 150 Ohm haben.

4. Sende-/Empfangseinrichtung (12A) nach einem der vorangehenden Ansprüche, zudem mit einer Schaltung (160) zur Begrenzung eines negativen Spannungswerts einer Differenzspannung (VDIFF) auf dem Bus (40) bei einem Übergang der Differenzspannung (VDIFF) von einem dominanten Buszustand (402) zu einem rezessiven Buszustand (401).

5. Sende-/Empfangseinrichtung (12B) nach Anspruch 1,
wobei der erste Widerstand (151) mit dem in Reihe geschalteten ersten Schalter (151B) zur Dämpfung der Schwingung zwischen die erste Busader (41) und die zweite Busader (42) schaltbar ist.

6. Sende-/Empfangseinrichtung (12B) nach Anspruch 5,
wobei der erste Widerstand (151) an den Anschluss (41A) zum Anschluss an die erste Busader (41) angeschlossen ist, und
wobei der erste Schalter (151B) an den Anschluss (42A) zum Anschluss an die zweite Busader (42) angeschlossen ist, und
wobei der erste Widerstand (151) insbesondere einen Wert von etwa 150 Ohm hat.

7. Sende-/Empfangseinrichtung (12; 12A; 12B) nach einem der vorangehenden Ansprüche,
wobei das Schwingungsreduktionsmodul (15; 15A; 15B) einen Hochfrequenzdetektor (159) aufweist zum Erfassen von hochfrequenter Störstrahlung (H_S) und zur Ermittlung, wann die Schwingungsdämpfung des Schwingungsreduktionsmoduls (15; 15A; 15B) eingeschaltet werden soll, so dass der erste Widerstand (151) zwischen die erste Busader (41) und den Anschluss (44) für Masse geschaltet wird und der zweite Widerstand (155) zwischen die zweite Busader (42) und den Anschluss (44) für die Spannungsversorgung des Bussystems (1) geschaltet wird,
wobei der Hochfrequenzdetektor (159) ausgestaltet ist, das Einschalten des Schwingungsreduktionsmoduls (15; 15A; 15B) nur nach einem Übergang von einem dominanten Buszustand (402) zu einem rezessiven Buszustand (401) anzuweisen, und
wobei die Sende-/Empfangseinrichtung (12; 12A; 12B) ausgestaltet ist, die Buszustände (401, 402) derart zu erzeugen, dass der dominante Buszustand (402) den rezessiven Buszustand (401) überschreiben kann.

8. Sende-/Empfangseinrichtung (12; 12A; 12B) nach einem der vorangehenden Ansprüche, zudem mit einem Zeitglied (1592) zum Ausschalten des Schwingungsreduktionsmoduls (15; 15A; 15B) nach Ablauf einer vorbestimmten Zeitdauer (T_{D}) nach dem Einschalten der Schwingungsdämpfung des Schwingungsreduktionsmoduls (15; 15A; 15B).

9. Sende-/Empfangseinrichtung (12; 12A; 12B) nach einem der vorangehenden Ansprüche, wobei die Sende-/Empfangseinrichtung (12; 12A; 12B) zum Senden und Empfangen von Nachrichten (45, 47) nach dem CAN FD Protokoll ausgestaltet sind.

10. Sende-/Empfangseinrichtung (12; 12A; 12B) nach einem der vorangehenden Ansprüche,
wobei die Empfangsstufe (122) der Sende-/Empfangseinrichtung (12; 12A; 12B) oder das Schwingungsreduktionsmodul (15B) zudem einen Kommunikationsphasen-Erfassungsblock (1592) zum Erfassen von unterschiedlichen Phasen einer Kommunikation auf dem Bus (40) aufweist, und
wobei der Kommunikationsphasen-Erfassungsblock (1592) ausgestaltet ist, die Schwingungsdämpfung des Schwingungsreduktionsmoduls (15; 15A; 15B) in Abhängigkeit von dem Erfassungsergebnis des Kommunikationsphasen-Erfassungsblocks (1592) einzuschalten.

11. Bussystem (1), mit
einem Bus (40), und
mindestens zwei Teilnehmerstationen (10; 20; 30), welche über den Bus (40) derart miteinander verbunden sind, dass sie miteinander kommunizieren können,
wobei mindestens eine der mindestens zwei Teilnehmerstationen (10; 20; 30) eine Sende-/Empfangseinrichtung (12; 12A; 12B) nach einem der vorangehenden Ansprüche aufweist.

12. Bussystem (1) nach Anspruch 11, wobei eine der mindestens zwei Teilnehmerstationen (10; 20; 30) eine Kommunikationssteuereinrichtung (11) aufweist, welche ausgestaltet ist, ein Signal (TxD) an die Sende-/Empfangseinrichtung (12; 12A; 12B) zu senden, welches die Sende-/Empfangseinrichtung (12; 12A; 12B) als Grundlage für das Signal (VDIFF) auf den Busadern (41, 42) verwendet, und das Signal (TxD) mit einem von der Sende-/Empfangseinrichtung (12; 12A; 12B) vom Bus (40) empfangenen Signal (RxD) zu vergleichen, und wobei die Kommunikationssteuereinrichtung (110) ausgestaltet ist, die Schwingungsreduktionsmodul (15; 15A; 15B) auf der Grundlage des Vergleichs anzusteuern.

13. Verfahren zur Reduzierung von Schwingungen einer Busdifferenzspannung bei eingekoppelten Störungen, wobei das Verfahren mit einer Sende-/Empfangseinrichtung (12; 12A; 12B)) für ein Bussystem (1) ausgeführt wird, bei welchem zumindest zeitweise ein exklusiver, kollisionsfreier Zugriff einer Teilnehmerstation (10, 20, 30) auf einen Bus (40) des Bussystems (1) gewährleistet ist, wobei die Sende-/Empfangseinrichtung (12; 12A; 12B)) einen Anschluss (44), der an Masse angeschlossen ist, einen Anschluss (43), der an eine Spannungsversorgung des Bussystems (1) angeschlossen ist, einen Anschluss (41A), der an eine erste Busader (41) angeschlossen ist, und einen Anschluss (42A), der an eine zweite Busader (42) angeschlossen ist, eine Sendestufe (121; 121A; 121B)) und ein Schwingungsreduktionsmodul (15; 15A; 15B)) aufweist, und wobei das Verfahren die Schritte aufweist,
Senden, mit der Sendestufe (121; 121A), eines Sendesignals (TxD) an den Anschluss (41A) für die erste Busader (41) eines Busses (40) des Bussystems (1),
Senden, mit der Sendestufe (121; 121A), des Sendesignals (TxD) an den Anschluss (42A) für die zweite Busader (42) des Busses (40), und
Dämpfen, mit dem Schwingungsreduktionsmodul (15; 15A), einer Schwingung eines sich an den Anschlüssen (41A, 42A) für die Busadern (41, 42) einstellenden Bussignals (VDIFF), wenn die Sende-/Empfangseinrichtung (12; 12A; 12B)) als Sender des Sendesignals (TxD) agiert, wobei das Schwingungsreduktionsmodul (15; 15A; 15B)) zum Dämpfen der Schwingung einen ersten Widerstand (151) des Schwingungsreduktionsmoduls (15; 15A; 15B)) mit einem zu dem ersten Widerstand (151) in Reihe geschalteten ersten Schalter (153; 151B) zwischen den Anschluss (41A), an den die erste Busader (41) angeschlossen ist, und den an Masse angeschlossenen Anschluss (44) schaltet.

14. Verfahren nach Anspruch 13,
wobei der erste Schalter (153) ein erster Transistor ist und der erste Widerstand (151) bei dem Schritt des Dämpfens mit dem in Reihe geschalteten ersten Schalter (153) als Schalter für die erste Busader (41) zwischen den Anschluss (41A) für die erste Busader (41) und den Anschluss (44) für Masse geschaltet wird, und
wobei das Schwingungsreduktionsmodul (15; 15A) zum Dämpfen der Schwingung einen zweiten Widerstand (155) des Schwingungsreduktionsmoduls (15; 15A) mit einem zu dem zweiten Widerstand (155) in Reihe geschalteten zweiten Transistor (153) als Schalter (157) für die zweite Busader (42) zwischen den Anschluss (42A), an den die zweite Busader (42) angeschlossen ist, und den Anschluss (43)schaltet, an den die Spannungsversorgung des Bussystems (1) angeschlossen ist.

15. Verfahren nach Anspruch 13, wobei das Verfahren zudem den Schritt aufweist,
Dämpfen, mit dem Schwingungsreduktionsmodul (15B), einer Schwingung eines sich an Anschlüssen (41A, 42A) für die Busadern (41, 42) einstellenden Bussignals (VDIFF), wenn die Sende-/Empfangseinrichtung (12b) als Sender des Sendesignals (TxD) agiert, wobei das Schwingungsreduktionsmodul (15B) zum Dämpfen der Schwingung den ersten Widerstand (151) des Schwingungsreduktionsmoduls (15B) mit dem in Reihe geschalteten ersten Schalter (151B) zwischen den an die erste Busader (41) angeschlossenen Anschluss (41A) und den an die zweite Busader (42) angeschlossenen Anschluss (42A) schaltet.

## Claims

1. Transmitting/receiving device (12; 12A; 12B) for a bus system (1), having a connection (44) for connection to earth,
a connection (43) for connection to a voltage supply of the bus system (1),
a connection (41A) for connection to a first bus wire (41),
a connection (42A) for connection to a second bus wire (42),
a transmission stage (121; 121A; 121B) for transmitting a transmission signal (TxD) to the connection (41A) for the first bus wire (41) of a bus (40) of the bus system (1), in which bus system (1) exclusive collision-free access of a subscriber station (10, 20, 30) to the bus (40) of the bus system (1) is at least temporarily ensured, and for transmitting the transmission signal (TxD) to the connection (42A) for the second bus wire (42) of the bus (40), and
an oscillation reduction module (15; 15A; 15B) for damping an oscillation of a bus signal (VDIFF) arising at the connections (41A, 42A) for the bus wires (41, 42) when the transmitting/receiving device (12; B) acts as transmitter of the transmission signal (TxD),
wherein the oscillation reduction module (15; 15A; 15B) has a first resistor (151) which can be switched between the connection (41A) for the first bus wire (41) and the connection (44) for earth using a first switch (153; 151B) connected in series with the first resistor (151).

2. Transmitting/receiving device (12; 12A) according to Claim 1,
wherein the first switch (153) is a first transistor and the first resistor (151) can be switched between the connection (41A) for the first bus wire (41) and the connection (44) for earth using the series-connected first switch (153) as a switch for the first bus wire (41), and
wherein the oscillation reduction module ((15; 15A) has a second resistor (155) which can be switched between the connection (42A) for the second bus wire (42) and the connection (44) for the voltage supply of the bus system (1) using a second transistor (153) connected in series with the second resistor (155) as a switch (157) for the second bus wire (42).

3. Transmitting/receiving device (12; 12A; 12B) according to Claim 2, wherein the first and second resistors (151, 155) each have a value of approximately 150 ohms.

4. Transmitting/receiving device (12A) according to any one of the preceding claims, furthermore having a circuit (160) for limiting a negative voltage value of a differential voltage (VDIFF) on the bus (40) in the event of a transition of the differential voltage (VDIFF) from a dominant bus state (402) to a recessive bus state (401).

5. Transmitting/receiving device (12B) according to Claim 1,
wherein the first resistor (151) can be switched between the first bus wire (41) and the second bus wire (42) using the series-connected first switch (151B) for damping the oscillation.

6. Transmitting/receiving device (12B) according to Claim 5,
wherein the first resistor (151) is connected to the connection (41A) for connection to the first bus wire (41), and
wherein the first switch (151B) is connected to the connection (42A) for connection to the second bus wire (42), and
wherein the first resistor (151) in particular has a value of approximately 150 ohms.

7. Transmitting/receiving device (12; 12A; 12B) according to any one of the preceding claims,
wherein the oscillation reduction module (15; 15A; 15B) has a high-frequency detector (159) for detecting high-frequency interference radiation (H_S) and for ascertaining when the oscillation damping of the oscillation reduction module (15; 15A; 15B) is to be switched on, so that the first resistor (151) is switched between the first bus wire (41) and the connection (44) for earth, and the second resistor (155) is switched between the second bus wire (42) and the connection (44) for the voltage supply of the bus system (1),
wherein the high-frequency detector (159) is configured to instruct the oscillation reduction module (15; 15A; 15B) to be switched on only after a transition from a dominant bus state (402) to a recessive bus state (401), and
wherein the transmitting/receiving device (12; 12A; 12B) is configured to generate the bus states (401, 402) in such a way that the dominant bus state (402) is able to overwrite the recessive bus state (401).

8. Transmitting/receiving device (12; 12A; 12B) according to any one of the preceding claims, further having a timer (1592) for switching off the oscillation reduction module (15; 15A; 15B) after expiration of a predetermined time period (T_{D}) after the oscillation damping of the oscillation reduction module (15; 15A; 15B) is switched on.

9. Transmitting/receiving device (12; 12A; 12B) according to any one of the preceding claims, wherein the transmitting/receiving device (12; 12A; 12B) is configured to transmit and receive messages (45, 47) according to the CAN FD protocol.

10. Transmitting/receiving device (12; 12A; 12B) according to any one of the preceding claims,
wherein the receiving stage (122) of the transmitting/receiving device (12; 12A; 12B) or the oscillation reduction module (15B) also has a communication phase detection block (1592) for detecting different phases of a communication on the bus (40), and
wherein the communication phase detection block (1592) is configured to switch on the oscillation damping of the oscillation reduction module (15; 15A; 15B) as a function of the detection result of the communication phase detection block (1592).

11. Bus system (1) having
a bus (40), and
at least two subscriber stations (10; 20; 30) which are connected to one another via the bus (40) in such a way that they can communicate with one another,
wherein at least one of the at least two subscriber stations (10; 20; 30) has a transmitting/receiving device (12; 12A; 12B) according to any one of the preceding claims.

12. Bus system (1) according to Claim 11, wherein one of the at least two subscriber stations (10; 20; 30) has a communication control device (11) which is configured to transmit a signal (TxD) to the transmitting/receiving device (12; 12A; 12B), which signal uses the transmitting/receiving device (12; 12A; 12B) as a basis for the signal (VDIFF) on the bus wires (41, 42), and to compare the signal (TxD) with a signal (RxD) received from the bus (40) by the transmitting/receiving device (12; 12A; 12B), and wherein the communication control device (110) is configured to actuate the oscillation reduction module (15; 15A; 15B) on the basis of the comparison.

13. Method for reducing oscillations of a bus differential voltage in the case of coupled-in interference, wherein the method is executed using a transmitting/receiving device (12; 12A; 12B)) for a bus system (1), in which exclusive, collision-free access of a subscriber station (10, 20, 30) to a bus (40) of the bus system (1) is at least temporarily ensured, wherein the transmitting/receiving device (12; 12A; 12B)) has a connection (44) connected to earth, a connection (43) connected to a voltage supply of the bus system (1), a connection (41A) connected to a first bus wire (41), and a connection (42A) connected to a second bus wire (42), a transmission stage (121; 121A; 121B)) and an oscillation reduction module (15; 15A; 15B)), and wherein the method comprises the steps of
transmitting, using the transmission stage (121; 121A), a transmission signal (TxD) to the connection (41A) for the first bus wire (41) of a bus (40) of the bus system (1),
transmitting, using the transmission stage (121; 121A), the transmission signal (TxD) to the connection (42A) for the second bus wire (42) of the bus (40), and
damping, using an oscillation reduction module (15; 15A), an oscillation of a bus signal (VDIFF) arising at the connections (41A, 42A) for the bus wires (41, 42) when the transmitting/receiving device (12; 12A; 12B)) acts as transmitter of the transmission signal (TxD), wherein, to damp the oscillation, the oscillation reduction module (15; 15A; 15B)) uses a first switch (153; 151B) connected in series with the first resistor (151) to switch a first resistor (151) of the oscillation reduction module (15; 15A; 15B)) between the connection (41A) to which the first bus wire (41) is connected and the connection (44) connected to earth.

14. Method according to Claim 13,
wherein the first switch (153) is a first transistor and, in the damping step, the first resistor (151) is switched between the connection (41A) for the first bus wire (41) and the connection (44) for earth using the series-connected first switch (153) as a switch for the first bus wire (41), and
wherein, to damp the oscillation, the oscillation reduction module (15; 15A) uses a second transistor (153) connected in series with the second resistor (155) as a switch (157) for the second bus wire (42) to switch a second resistor (155) of the oscillation reduction module (15; 15A) between the connection (42A) to which the second bus wire (42) is connected and the connection (43) to which the voltage supply of the bus system (1) is connected.

15. Method according to Claim 13, wherein the method furthermore comprises the following step
damping, using the oscillation reduction module (15B), an oscillation of a bus signal (VDIFF) arising at connections (41A, 42A) for the bus wires (41, 42) when the transmitting/receiving device (12b) acts as transmitter of the transmission signal (TxD), wherein, to damp the oscillation, the oscillation reduction module (15B) uses the series-connected first switch (151B) to switch the first resistor (151) of the oscillation reduction module (15B) between the connection (41A) connected to the first bus wire (41) and the connection (42A) connected to the second bus wire (42).

## Revendications

1. Dispositif d'émission/réception (12 ; 12A ; 12B) pour un système de bus (1), comprenant
une borne (44) destinée au raccordement à la masse,
une borne (43) destinée au raccordement à une alimentation électrique du système de bus (1),
une borne (41A) destinée au raccordement à un premier conducteur de bus (41),
une borne (42A) destinée au raccordement à un deuxième conducteur de bus (42),
un étage d'émission (121 ; 121A ; 121B) destiné à émettre un signal d'émission (TxD) sur la borne (41A) pour le premier conducteur de bus (41) d'un bus (40) du système de bus (1), système de bus (1) avec lequel un accès exclusif et sans collision d'une station d'abonné (10, 20, 30) au bus (40) du système de bus (1) est garanti au moins temporairement, et destiné à émettre le signal d'émission (TxD) sur la borne (42A) pour le deuxième conducteur de bus (42) du bus (40), et
un module de réduction d'oscillations (15 ; 15A ; 15B) destiné à amortir une oscillation d'un signal de bus (VDIFF) s'établissant sur les bornes (41A, 42A) pour les conducteurs de bus (41, 42) lorsque le dispositif d'émission/réception (12 ; B) agit en tant qu'émetteur du signal d'émission (TxD),
le module de réduction d'oscillations (15 ; 15A ; 15B) possédant une première résistance (151) qui peut être commutée avec un premier commutateur (153 ; 151B), branché en série à la première résistance (151), entre la borne (41A) pour le premier conducteur de bus (41) et la borne (44) pour la masse.

2. Dispositif d'émission/réception (12 ; 12A) selon la revendication 1,
le premier commutateur (153) étant un premier transistor et la première résistance (151) pouvant être commutée avec le premier commutateur (153) branché en série en tant que commutateur pour le premier conducteur de bus (41) entre la borne (41A) pour le premier conducteur de bus (41) et la borne (44) pour la masse, et
le module de réduction d'oscillations ((15 ; 15A) possédant une deuxième résistance (155) qui peut être commutée avec un deuxième transistor (153) branché en série à la deuxième résistance (155) en tant que commutateur (157) pour le deuxième conducteur de bus (42) entre la borne (42A) pour le deuxième conducteur de bus (42) et la borne (44) pour l'alimentation électrique du système de bus (1).

3. Dispositif d'émission/réception (12 ; 12A ; 12B) selon la revendication 2, les première et deuxième résistances (151, 155) ayant chacune une valeur d'environ 150 ohms.

4. Dispositif d'émission/réception (12A) selon l'une des revendications précédentes, comprenant en outre un circuit (160) destiné à limiter une valeur de tension négative d'une tension différentielle (VDIFF) sur le bus (40) lors d'une transition de la tension différentielle (VDIFF) d'un état de bus dominant (402) à un état de bus récessif (401).

5. Dispositif d'émission/réception (12B) selon la revendication 1,
la première résistance (151) pouvant être commutée avec le premier commutateur (151B) branché en série pour atténuer l'oscillation entre le premier conducteur de bus (41) et le deuxième conducteur de bus (42).

6. Dispositif d'émission/réception (12B) selon la revendication 5,
la première résistance (151) étant raccordée à la borne (41A) destinée au raccordement au premier conducteur de bus (41), et
le premier commutateur (151B) étant raccordé à la borne (42A) destinée au raccordement au deuxième conducteur de bus (42), et
la première résistance (151) ayant notamment une valeur d'environ 150 ohms.

7. Dispositif d'émission/réception (12 ; 12A ; 12B) selon l'une des revendications précédentes,
le module de réduction d'oscillations (15 ; 15A ; 15B) possédant un détecteur de haute fréquence (159) destiné à détecter un rayonnement parasite haute fréquence (H_S) et destiné à déterminer quand l'amortissement d'oscillations du module de réduction d'oscillations (15 ; 15A ; 15B) doit être mis en service, de sorte que la première résistance (151) soit connectée entre le premier conducteur de bus (41) et la borne (44) pour la masse et que la deuxième résistance (155) soit connectée entre le deuxième conducteur de bus (42) et la borne (44) pour l'alimentation électrique du système de bus (1),
le détecteur de haute fréquence (159) étant conçu pour commander la mise en service du module de réduction des oscillations (15 ; 15A ; 15B) uniquement après une transition d'un état de bus dominant (402) à un état de bus récessif (401), et
le dispositif d'émission/réception (12 ; 12A ; 12B) étant conçu pour générer les états de bus (401, 402) de telle sorte que l'état de bus dominant (402) puisse écraser l'état de bus récessif (401).

8. Dispositif d'émission/réception (12 ; 12A ; 12B) selon l'une des revendications précédentes, comprenant en outre un élément de temporisation (1592) destiné à mettre hors service le module de réduction d'oscillations (15 ; 15A ; 15B) après écoulement d'une durée (T_{D}) prédéterminée après l'activation de l'amortissement d'oscillations du module de réduction d'oscillations (15 ; 15A ; 15B).

9. Dispositif d'émission/réception (12 ; 12A ; 12B) selon l'une des revendications précédentes, le dispositif d'émission/réception (12 ; 12A ; 12B) étant conçu pour émettre et recevoir des messages (45, 47) selon le protocole CAN FD.

10. Dispositif d'émission/réception (12 ; 12A ; 12B) selon l'une des revendications précédentes,
l'étage de réception (122) du dispositif d'émission/réception (12 ; 12A ; 12B) ou le module de réduction d'oscillations (15B) possédant en outre un bloc de détection de phases de communication (1592) destiné à détecter différentes phases d'une communication sur le bus (40), et
le bloc de détection de phases de communication (1592) étant conçu pour mettre en service l'amortissement d'oscillations du module de réduction d'oscillations (15 ; 15A ; 15B) en fonction du résultat de la détection du bloc de détection de phases de communication (1592).

11. Système de bus (1), comprenant
un bus (40), et
au moins deux stations d'abonnés (10 ; 20 ; 30) qui sont reliées entre elles par le bus (40) de manière à pouvoir communiquer entre elles,
au moins l'une des au moins deux stations d'abonnés (10 ; 20 ; 30) possédant un dispositif d'émission/réception (12 ; 12A ; 12B) selon l'une des revendications précédentes.

12. Système de bus (1) selon la revendication 11, l'une des au moins deux stations d'abonnés (10 ; 20 ; 30) possédant un dispositif de commande de communication (11), qui est conçu pour envoyer un signal (TxD) au dispositif d'émission/réception (12 ; 12A ; 12B), lequel utilise le dispositif d'émission/réception (12 ; 12A ; 12B) comme base pour le signal (VDIFF) sur les conducteurs de bus (41, 42), et pour comparer le signal (TxD) avec un signal (RxD) reçu du bus (40) par le dispositif d'émission/réception (12 ; 12A ; 12B), et le dispositif de commande de communication (110) étant conçu pour commander le module de réduction d'oscillations (15 ; 15A ; 15B) sur la base de la comparaison.

13. Procédé de réduction d'oscillations d'une tension différentielle de bus en cas de parasites injectés, le procédé étant mis en œuvre avec un dispositif d'émission/réception (12 ; 12A ; 12B) pour un système de bus (1), avec lequel un accès exclusif et sans collision d'une station d'abonné (10, 20, 30) au bus (40) du système de bus (1) est garanti au moins temporairement, le dispositif d'émission/réception (12 ; 12A ; 12B) possédant une borne (44) qui est raccordée à la masse, une borne (43) qui est raccordée à une alimentation électrique du système de bus (1), une borne (41A) qui est raccordée à un premier conducteur de bus (41) et une borne (42A) qui est raccordée à un deuxième conducteur de bus (42), un étage d'émission (121 ; 121A ; 121B) et un module de réduction d'oscillations (15 ; 15A ; 15B), et le procédé comprenant les étapes consistant à
envoyer, par l'étage d'émission (121 ; 121A), un signal d'émission (TxD) à la borne (41A) pour le premier conducteur de bus (41) d'un bus (40) du système de bus (1),
envoyer, parc l'étage d'émission (121 ; 121A), un signal d'émission (TxD) à la borne (42A) pour le deuxième conducteur de bus (42) du bus (40), et
atténuer, avec le module de réduction d'oscillations (15 ; 15A), une oscillation d'un signal de bus (VDIFF) établi au niveau des bornes (41A, 42A) pour les conducteurs de bus (41, 42) lorsque le dispositif d'émission/réception (12 ; 12A ; 12B) agit en tant qu'émetteur du signal d'émission (TxD), le module de réduction d'oscillations (15 ; 15A ; 15B) commutant, en vue d'atténuer l'oscillation, une première résistance (151) du module de réduction d'oscillations (15 ; 15A ; 15B) avec un premier commutateur (153 ; 151B) branché en série avec la première résistance (151) entre la borne (41A) à laquelle est raccordé le premier conducteur de bus (41) et la borne (44) qui est raccordée à la masse.

14. Procédé selon la revendication 13,
le premier commutateur (153) étant un premier transistor et la première résistance (151), lors de l'étape d'atténuation, étant commutée avec le premier commutateur (153) branché en série en tant que commutateur pour le premier conducteur de bus (41) entre la borne (41A) pour le premier conducteur de bus (41) et la borne (44) pour la masse, et
le module de réduction d'oscillations (15 ; 15A), en vue d'atténuer l'oscillation, commutant une deuxième résistance (155) du module de réduction d'oscillations (15 ; 15A) avec un deuxième transistor (153) branché en série avec la deuxième résistance (155) en tant que commutateur (157) pour le deuxième conducteur de bus (42) entre la borne (42A) à laquelle est raccordé le deuxième conducteur de bus (42) et la borne (43) à laquelle est raccordée l'alimentation électrique du système de bus (1).

15. Procédé selon la revendication 13, le procédé comprenant en outre l'étape
atténuer, avec le module de réduction d'oscillations (15B), une oscillation d'un signal de bus (VDIFF) qui s'établit au niveau des bornes (41A, 42A) pour les conducteurs de bus (41, 42) lorsque le dispositif d'émission/réception (12b) agit en tant qu'émetteur du signal d'émission (TxD), le module de réduction d'oscillations (15B) commutant, en vue d'atténuer l'oscillation, la première résistance (151) du module de réduction d'oscillations (15B) avec le premier commutateur (151B) branché en série, entre la borne (41A) raccordée au premier conducteur de bus (41) et la borne (42A) raccordée au deuxième conducteur de bus (42).
